# EUROPÄISCHE PATENTANMELDUNG

(11) **EP 1 818 821 A2**
(43) Veröffentlichungstag der Anmeldung: **15.08.2007**
(21) Anmeldenummer: 06124712.8
(22) Anmeldetag: 24.11.2006
(51) Int. Cl.: G06F 9/445

(54) **Verfahren zum Aktualisieren einer Einrichtung**

(30) Priorität: 09.12.2005 DE 102005059319
(71) Anmelder: ROBERT BOSCH GMBH, 70442 Stuttgart (DE)
(72) Erfinder: Liebehenschel, Jens, 65835, Liederbach (DE); Kairies, Volker, 71701, Schwieberdingen (DE)

(57) **Zusammenfassung**

Das erfindungsgemäße Verfahren ist für einen Datenstand, der Daten (8, 10, 12) umfasst, die auf einem ersten Segment (2) abgespeichert sind, durchführbar.

Dabei ist für den Datenstand vorgesehen, dass mindestens ein Teil der Daten (8, 10, 12) konvertiert wird. Bei Durchführung des Verfahrens werden diese konvertierten Daten (8, 10, 12) auf einem zweiten Segment abgespeichert.

## Beschreibung

### Stand der Technik

Die Erfindung betrifft ein Verfahren zum Betreiben einer Einrichtung, eine Einrichtung, ein Computerprogramm und ein Computerprogrammprodukt.

Die Druckschrift DE 198 39 680 B4 beschreibt ein Verfahren und eine Vorrichtung zur Veränderung eines Speicherinhalts von Steuergeräten. Hierbei ist eine definierte Aufteilung in Speicherbereiche vorgesehen. Des weiteren sind Programme in erste und zweite Programme aufgeteilt, wobei die ersten Programme in einem nicht veränderbaren Speicherbereich abgelegt sind. Zweite Programme werden durch Manipulation in den Speicherbereichen gesichert, indem vor der Manipulation von diesen zweiten Programmen Sicherungskopien erzeugt werden.

Vor diesem Hintergrund wird ein Verfahren mit den Merkmalen des Patentanspruchs 1, eine Einrichtung mit den Merkmalen des Patentanspruchs 6, ein Computerprogramm mit den Merkmalen des Patentanspruchs 8 und ein Computerprogrammprodukt mit den Merkmalen des Patentanspruchs 9 vorgestellt.

### Vorteile der Erfindung

Das erfindungsgemäße Verfahren ist für einen Datenstand, der Daten umfasst, die auf einem ersten Segment abgespeichert sind, durchführbar. Dabei ist für den Datenstand vorgesehen, dass mindestens ein Teil der Daten konvertiert wird. Bei Durchführung des Verfahrens werden diese konvertierten Daten auf einem zweiten Segment abgespeichert.

Die erfindungsgemäße Einrichtung weist mindestens zwei Segmente auf, wobei auf einem ersten Segment ein Datenstand mit Daten abgespeichert ist und mindestens ein Teil dieser Daten zu konvertieren ist. Die Einrichtung ist dazu ausgebildet, die konvertierten Daten auf einem zweiten Segment abzuspeichern.

Das erfindungsgemäße Computerprogramm mit Programmcodemitteln ist dazu vorgesehen, alle Schritte eines erfindungsgemäßen Verfahrens durchzuführen, wenn das Computerprogramm auf einem Computer oder einer entsprechenden Recheneinheit, insbesondere einer erfindungsgemäßen Einrichtung, ausgeführt wird.

Das erfindungsgemäße Computerprogrammprodukt mit Programmcodemitteln, die auf einem computerlesbaren Datenträger gespeichert sind, ist dazu vorgesehen, alle Schritte eines erfindungsgemäßen Verfahrens durchzuführen, wenn das Computerprogramm auf einem Computer oder einer entsprechenden Recheneinheit, insbesondere einer erfindungsgemäßen Einrichtung, ausgeführt wird.

Weitere vorteilhafte Ausgestaltungen ergeben sich aus den jeweiligen Unteransprüchen.

Mit der Erfindung wird vorzugsweise eine Strategie zur Konvertierung nichtflüchtiger Daten nach einem Software-Update, also einer Manipulation oder Aktualisierung der Software, bei bestimmten als Flash-Dateisystemen ausgebildeten Einrichtungen bereitgestellt.

In eingebetteten (embedded) Einrichtungen oder Systemen können nichtflüchtige Daten auf einer sog. Flash-Speicher-Hardware abgelegt werden. Hierbei werden zwei logische Segmente verwendet, auf denen die Daten abwechselnd gespeichert werden. Die Flash-Speicher-Hardware kann mehrere physikalische Segmente aufweisen, die anteilig den zwei logischen Segmenten zugeordnet sind.

Mit der vorliegenden Erfindung kann bei solchen Datei-Systemen oder Einrichtungen eine Vereinfachung einer Konvertierung von Daten nach einem Software-Update erreicht werden. Es ist während der Konvertierung vorgesehen, dass alte Daten auf einem alten, ersten Segment belassen werden, während die konvertierten Daten auf einem neuen, zweiten Segment abgespeichert werden. Außerdem können auch nicht-konvertierte Daten auf dem neuen Segment abgespeichert werden. Diese Vorgehensweise ermöglicht eine Reduktion einer Komplexität innerhalb der Software und eine Verringerung eines Risikos von Datenverlusten durch die Konvertierung nach dem Software-Update.

Voraussetzung zur Realisierung des vorgestellten erfindungsgemäßen Verfahrens ist ein zugrundeliegendes Datei-System, in dem Daten in einem Flash in zwei unabhängigen logischen Segmenten abgespeichert sind. Normalerweise wird in einem der beiden Segmente gearbeitet, bis dessen Kapazitätsgrenze erreicht ist. In diesem Fall wird ein letzter Datenstand von einem auf das andere logische Segment übertragen. Lediglich während dieser Übertragung der Daten werden üblicherweise beide Segmente parallel verwendet.

Bei dem erfindungsgemäßen Verfahren sowie mit der erfindungsgemäßen Einrichtung ist eine gleichzeitige Verwendung beider logischer Segmente zur Konvertierung der Daten nach einem Software-Update des Systems bzw. der Einrichtung möglich. Sofern sich die Struktur der nicht-flüchtigen Daten mit dem Software-Update geändert hat, ist die Konvertierung der Daten erforderlich. Dabei werden die Daten von einem ersten Format, das von einer alten, ersten Software-Version unterstützt wird, in ein anderes, neues Format, das von einer neuen, zweiten Software-Version unterstützt wird, überführt.

Es ist vorgesehen, dass Daten eines alten Datenstands, dessen Format durch die erste Software-Version unterstützt wird, vorzugsweise bei der Konvertierung auf dem alten Segment belassen werden, wohingegen die konvertierten Daten, deren Format durch die neue Software-Version unterstützt wird, die sich somit auf dem neuen Datenstand befinden, auf dem neuen Segment abgespeichert werden. Nach Beendigung der Konvertierung kann das erste Segment freigegeben werden.

In vorteilhafter Ausgestaltung der Erfindung ergibt sich hierbei, dass eine Steuerung der Konvertierung oder eines Konvertierungsvorgangs zentral durch eine für die Speicherung der Daten verantwortliche Einheit, insbesondere einer Software-Einheit, oder eine geeignete Komponente erfolgen kann. Diese Einheit ist dazu ausgebildet zu erkennen, dass Daten konvertiert werden müssen. Die Einheit kann den Konvertierungsvorgang sowohl einleiten als auch beenden. Des weiteren ist diese Einheit zum Erkennen von Abbrüchen und Unterbrechungen des Konvertiervorgangs, bspw. durch Spannungsunterbrechungen oder Resets, und zum Wiederholen und/oder Fortsetzen des Konvertierungsvorgangs ausgebildet. Die eigentliche Konvertierung ist durch einen Datenbesitzer durchzuführen, die Einheit steuert die Konvertierung lediglich.

Mit einer derartigen klaren Trennung einer Durchführung der Konvertierung von einer Steuerung der Konvertierung kann eine Komplexitätsreduktion bei den Datenbesitzern erreicht werden. Der Datenbesitzer muss demnach nur noch wissen, wie die Daten konvertiert werden müssen, jedoch nicht, zu welchem Zeitpunkt dies erfolgt. Außerdem kann der Datenbesitzer davon ausgehen, dass die für das Speichern der Daten verantwortliche Einheit oder Komponente die Daten in einem richtigen Format bereitstellt. Damit entfällt die Notwendigkeit einer Überprüfung, ob das Format der Daten zu der Software-Version passt. Dies ist jedoch auch unter Architekturgesichtspunkten von Vorteil, da bspw. somit eine Testbarkeit verbessert werden kann.

Auch in einem Fehlerfall bringt eine zentrale Steuerung Vorteile, falls bspw. die Konvertierung nicht erfolgreich abgeschlossen worden ist, kann dies direkt anhand der Zustände der beiden logischen Segmente erkannt werden. Es ist demnach keine Analyse der gespeicherten Daten notwendig. Außerdem muss der Datenbesitzer derartige Fehlerfälle nicht behandeln, was die Anzahl von Testfällen reduziert.

Ein Risiko für den Datenbesitzer, durch die Konvertierung Daten in falschem Format zu verwenden, wird gegenüber einer Vorgehensweise, bei der die Daten in einem Segment behalten werden, geringer. Dies ergibt sich konsequenter- und vorteilhafterweise aus der erfindungsgemäßen Verwendung beider Segmente für die unterschiedlichen Datenformate.

Durch einen Wechsel des logischen Segments, insbesondere für den Fall, dass das andere erste Segment nicht voll ist, wird ein sehr geringer Anteil einer verfügbaren Kapazität einer Flash-Hardware über einen gesamten Lebenszyklus beschränkt. Da aber eine Anzahl von Software-Updates in der Regel sehr viel geringer ist als eine Anzahl der zulässigen Löschzyklen einer Flash-Hardware, ist ein derartiger Verlust vernachlässigbar.

Eine derartige Verwendung der Flash-Hardware hat des weiteren Vorteile, die bei einer Erstellung einer Software ausgenutzt werden können. Es ist bspw. eine bessere Struktur der Software, eine kleinere Codegröße und/oder eine leichtere Testbarkeit erreichbar. Außerdem kann das Risiko von Ausfällen durch die Konvertierung reduziert werden.

Bei einer möglichen Anwendung, falls Inhalte eines verwendeten Flash-Bereichs zugänglich sind, ist es möglich, anhand mehrerer Speicher-Layouts aus aufeinanderfolgenden Wach- und Schlafzyklen des Steuergeräts Muster zu erkennen, die einen Hinweis auf eine Verwendung des Verfahrens geben. Dazu ist es erforderlich, eine verwendete Organisation der Daten auf einem Medium, also den mindestens zwei Segmenten, zu verstehen und das Software-Update initiieren zu können.

Alternativ kann durch Debuggen festgestellt werden, ob das Verfahren umgesetzt worden ist, sofern ein kombinierter Code verfügbar ist. Falls bspw. ein Quellcode oder eine Dokumentation verfügbar ist, kann auf einfache Weise festgestellt werden, ob das erfindungsgemäße Verfahren umgesetzt worden ist.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt eine schematische Darstellung einer bevorzugten Ausführungsform eines ersten Segments.
- Figur 2: zeigt in schematischer Darstellung eine erste Ausführungsform eines zweiten Segments.
- Figur 3: zeigt in schematischer Darstellung eine zweite Ausführungsform eines zweiten Segments.

Die Figuren werden zusammenhängend und übergreifend beschrieben, gleiche Bezugszeichen bezeichnen gleiche Bauteile.

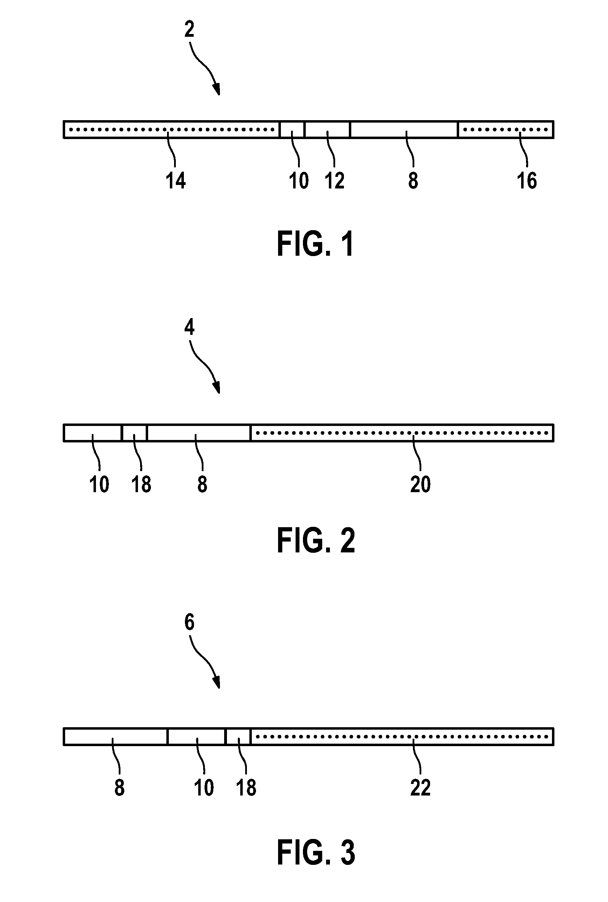

Die Figuren 1 bis 3 zeigen, wie eine Konvertierung ablaufen kann, wenn Daten eines alten Datenbestands auf einem ersten Segment 2 (Figur 1) und Daten eines neuen Datenbestands auf einem zweiten Segment 4 (Figur 2) oder 6 (Figur 3) einer Einrichtung abgespeichert werden.

Um diese Vorgehensweise detailliert zu betrachten, müssen einige Architektur- und Design-Entscheidungen getroffen werden. Hierbei sei angenommen, dass die Konvertierung der Daten nach einer Aktualisierung einer Software von einer in den Figuren nicht dargestellten zentralen Einheit oder Komponente gesteuert wird. Diese zentrale Einheit ist für eine Benachrichtigung eines Datenbesitzers ausgebildet. Der Datenbesitzer konvertiert seine eigenen Daten unter Verwendung einer Schnittstelle zu der für die Verwaltung und Steuerung der Daten zuständigen zentralen Einheit. Diese bietet dem Datenbesitzer über die Schnittstelle die Möglichkeit zur Eingabe von Befehlen wie "read" (Lesen), "write" (Schreiben) und "delete" (Löschen), worauf entsprechende Operationen durchgeführt werden.

Figur 1 zeigt ein erstes Segment 2, auf dem nach dem alten Datenstand ein erstes Datum 8, ein zweites Datum 10 und ein drittes Datum 12 abgespeichert sind. Diese drei Daten 8, 10, 12 gehören mindestens einem Datenbesitzer. Außerdem weist das erste Segment 2 einen ersten Speicherbereich 14, der mit alten Daten beschrieben ist, und einen freien zweiten Speicherbereich 16 auf.

Es ist vorgesehen, dass nach einer Aktualisierung der Software der Einrichtung, also einem sog. Software-Update, sich der neue Datenstand wie nachfolgend beschrieben aus dem alten Datenstand ergibt: das erste Datum 8 bleibt unverändert erhalten, eine interne Struktur des zweiten Datums 10 hat sich geändert, wobei dieses zweite Datum 10 länger wird. Das dritte Datum 12 wird in der neuen Software-Version nicht mehr verwendet. Ein viertes Datum 18 kommt in der neuen Software-Version hinzu.

Figur 2 zeigt die erste Ausführungsform des zweiten Segments 4 mit den zumindest teilweise konvertierten Daten 8, 10, 18. Es ist vorgesehen, dass die zentrale Einheit erkennt, dass die Daten 8, 10, 18 zumindest teilweise konvertiert werden müssen. Die zentrale Einheit benachrichtigt den Datenbesitzer, dieser gibt Befehle an der Schnittstelle zu der für die Verwaltung der Daten zuständigen Einheit ein, worauf folgende Operationen durchgeführt werden:
- Für das erste Datum 8 wird keine Aktion durchgeführt. Dieses erste Datum 8 wird nach Abschluss der Konvertierung automatisch in den neuen Datenstand übernommen, da es von dem Datenbesitzer nicht explizit gelöscht worden ist.
- Für das zweite Datum 10 erfolgt die Operation "read", danach wird bei einer internen Konvertierung für das zweite Datum 10 das neue Format bereitgestellt, danach erfolgt für das zweite Datum 10 die Operation "write".
- Für das dritte Datum 12 erfolgt die Operation "delete".
- Für das vierte Datum 18 wird die Operation "write" durchgeführt.

Nach diesem Konvertierungsvorgang befinden sich die Daten 8, 10, 18 des neuen Datenstands auf dem in Figur 2 gemäß erster Ausführungsform gezeigten zweiten Segment 4. Dabei ist dem Datenbesitzer verborgen geblieben, dass die beiden Datenstände auf unterschiedlichen Segmenten 2, 4 abgespeichert worden sind, er hat lediglich die Operationen zur Konvertierung ausführen lassen.

Das in Figur 2 gezeigte zweite Segment 4 weist zudem noch einen freien Speicherbereich 20 auf.

Figur 3 zeigt in zweiter Ausführungsform das zweite Segment 6 für den Fall, dass die Schnittstelle keine "delete"-Operation besitzt, in diesem Fall wären folgende Operationen während des Konvertierungsvorgangs auszuführen:
- Für das erste Datum 8 erfolgt die Operation "read" danach die Operation "write".
- Für das zweite Datum 10 erfolgt die Operation "read". Anschließend erfolgt bei dem internen Konvertierungsvorgang eine Bereitstellung des neuen Formats für das zweite Datum 10. Danach erfolgt für das zweite Datum 10 die Operation "write".
- Für das dritte Datum 12 erfolgt keine Aktion, da dieses auf dem zweiten Segment 6 nicht mehr vorhanden ist.
- Für das vierte Datum 18 erfolgt die Operation "write".

Somit ergibt sich der neue Datenstand, wie auf dem zweiten Segment 6 in Figur 3 gezeigt, dieses zweite Segment 6 weist zudem einen freien Speicherbereich 22 auf.

Dem Datenbesitzer ist auch bei dieser anhand Figur 3 gezeigten Ausführungsform verborgen geblieben, dass die Datenstände auf unterschiedlichen Segmenten 2, 6 abgespeichert sind. Die Daten 8, 10, 18 des neuen Datenstands in dem von der neuen Software unterstützten Format wurden in diesem Fall mittels der Operation "write" geschrieben.

## Patentansprüche

1. Verfahren, das für einen Datenstand, der Daten (8, 10, 12, 18) umfasst, die auf einem ersten Segment (2) abgespeichert sind, durchführbar ist, wobei für den Datenstand vorgesehen ist, dass mindestens ein Teil der Daten (8, 10, 12, 18) konvertiert wird, wobei bei Durchführung des Verfahrens diese konvertierten Daten (8, 10, 12, 18) auf einem zweiten Segment (4, 6) abgespeichert werden.

2. Verfahren nach Anspruch 1, das nach einer Modifikation einer Software für den Datenstand durchgeführt wird, wobei Daten (8, 10, 12, 18), deren Struktur sich aufgrund der Modifikation verändert hat, konvertiert werden.

3. Verfahren nach Anspruch 2, bei dem bei der Modifikation Daten (8, 10, 12, 18) von einem ersten Format in ein zweites Format überführt werden.

4. Verfahren nach einem der voranstehenden Ansprüche, bei dem eine Konvertierung der Daten (8, 10, 12, 18) durch eine für eine Speicherung der Daten vorgesehenen Einheit gesteuert wird.

5. Verfahren nach einem der voranstehenden Ansprüche, das für eine Einrichtung, die mindestens zwei Segmente (2, 4, 6) aufweist, durchgeführt wird.

6. Einrichtung, die mindestens zwei Segmente (2, 4, 6) aufweist, wobei auf einem ersten Segment (2) ein Datenstand mit Daten (8, 10, 12, 18) abgespeichert ist, wobei mindestens ein Teil dieser Daten (8, 10, 12, 18) zu konvertieren ist, und wobei die Einrichtung dazu ausgebildet ist, die konvertierten Daten (8, 10, 12, 18) auf einem zweiten Segment (4, 6) abzuspeichern.

7. Einrichtung nach Anspruch 6, die einen die mindestens zwei Segmente (2, 4, 6) aufweisenden Flash-Speicher aufweist.

8. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere in einer Einrichtung nach einem der Ansprüche 7 oder 8, ausgeführt wird.

9. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere in einer Einrichtung nach einem der Ansprüche 7 oder 8, ausgeführt wird.
